(19) Europäisches Patentamt
European Patent Office
Office européen des brevets

(11) **EP 2 367 360 A2**

(12) **EUROPÄISCHE PATENTANMELDUNG**

(43) Veröffentlichungstag:
**21.09.2011 Patentblatt 2011/38**

(51) Int Cl.:
***H04N 9/68*** *(2006.01)*          *H04N 9/64* *(2006.01)*

(21) Anmeldenummer: **11157040.4**

(22) Anmeldetag: **04.03.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **18.03.2010   DE 102010003039**

(71) Anmelder: **Balser AG**
**22926 Ahrensburg (DE)**

(72) Erfinder: **Dr. Kunze, Jörg**
**22926, AHRENSBURG (DE)**

(74) Vertreter: **Eisenführ, Speiser & Partner**
**Johannes-Brahms-Platz 1**
**20355 Hamburg (DE)**

(54) **Verfahren zur Korrektur von Farbfehlern in Bildern von digitalen Farbkameras**

(57)   Die Erfindung betrifft ein Verfahren zur Korrektur von Farbfehlern in Bildern von digitalen Farbkameras, welche durch die Sättigung einzelner Farbwerte (R,G,B) hervorgerufen werden. Solche Farbfehler werden z.B. häufig bei der Abbildung farbiger Signallampen beobachtet. Erfindungsgemäß wird vorgeschlagen, einen überbelichteten Pixel (30) unter Verwendung von Farbwerten (R0,G0,BO) mindestens eines, an den oder an die überbelichteten Pixel (30,34) angrenzenden, nicht überbelichteten Pixels (31), korrigierte Farbwerte für den überbelichteten Pixel rechnerisch zu ermitteln. Damit können auf vorteilhafte und einfache Weise sättigungsbedingte Farbfehler korrigiert werden. Das Korrekturverfahren ist einfach und kann preiswert und mit geringem Arbeits- und Ressourceneinsatz in die Programmierung einer Digitalkamera implementiert werden. Abgesehen von der einmaligen Implementierung fallen keine weiteren Kosten an, insbesondere keine Material- und keine Energiekosten. Das Verfahren ist universell einsetzbar. Es eignet sich sowohl für Flächen- als auch für Zeilenkameras. Das Verfahren ist echtzeitfähig, und kann darüber hinaus auch in einer nachgelagerten Bildbearbeitung eingesetzt werden.

**Fig. 7**

EP 2 367 360 A2

**Beschreibung**

Die vorliegende Erfindung betrifft ein Verfahren zur Korrektur überbelichteter Bildpunkte in einem digitalen Farbbild gemäß Anspruch 1, ein entsprechendes Computerprogramm bzw. Konfigurationsprogramm gemäß Anspruch 22 bzw. 23, einen Datenträger gemäß Anspruch 24 sowie eine Digitalkamera zur Aufnahme digitaler Farbbilder gemäß Anspruch 25.

**Hintergrund**

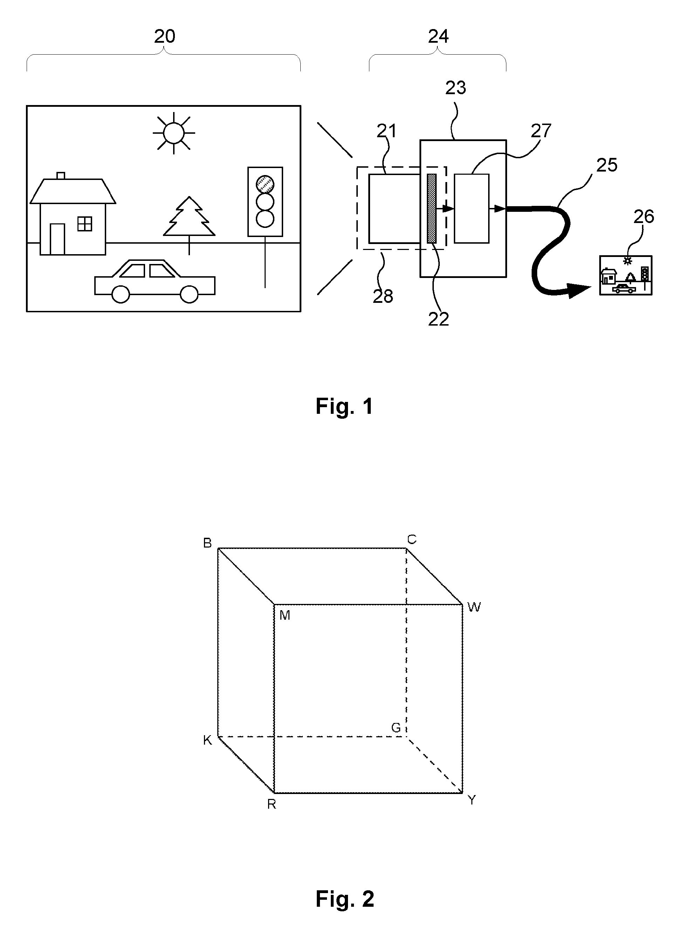

Digitale Farbkameras werden häufig für vielseitige, teilweise automatisierte Überwachungsaufgaben eingesetzt. Beispielsweise können öffentliche Plätze, Straßen und Verkehrsknotenpunkte, Bahnhöfe und Flughäfen, aber auch Betriebseinrichtungen, Maschinen, Anlagen und Produktionsvorgänge überwacht werden.
In den dabei aufgenommenen Bildern ist oftmals der Zustand von farbigen Lampen, z.B. Signal- oder Indikatorlampen zu erfassen. Signallampen stellen Zustände sehr häufig durch Farben dar, wobei rote, gelbe, grüne und blaue Lampen besonders häufig vorkommen.
Beispielsweise werden im Straßenverkehr weltweit farbige Signallampen in Ampeln sowie Fahrzeugbeleuchtungen, im Bahnverkehr als Signalanlagen, gleichermaßen auch im Luft- und Schiffsverkehr eingesetzt. Weiterhin werden farbige Signallampen beispielsweise auch in technischen oder industriellen Anlagen, z.B. als Betriebszustandsanzeigen oder als Teil von Kontrolleinrichtungen, z.B. Bedienungspulten, eingesetzt.
US 7,495,579 zeigt ein Sensorsystem zur Überwachung des Zustandes eines entfernt angeordneten Verkehrslichts in Form einer Ampel mit einer roten, einer bernsteinfarbigen und einer grünen Signallampe. Das System besteht aus Detektoren mit Optik, die mit Schmalbandfiltern ausgerüstet ist. Dabei soll das Sensorsystem den Status der Ampel in einem bestimmten Abstand ohne Anschluss an eine elektronische Steuerung der Ampel erfassen.
Die Verwendung digitaler Farbkameras zur Aufnahme einer Bildszene und Ausgabe von digitalen Bilddaten zur weiteren Nutzung ist grundsätzlich bekannt. Fig. 1 veranschaulicht ein bekanntes Setup, in dem eine Digitalkamera 23 dazu verwendet wird, ein Farbbild einer Bildszene 20 aufzunehmen. Dazu wird die Bildszene 20 mittels eines Kamerasystems 24 bestehend aus einer Optik 21 und einer Digitalkamera 23 mit mindestens einem Bildsensor 22 aufgenommen. Die Optik 21, z.B. eine Linsenanordnung eines Objektivs, bildet die Bildszene 20 auf den mindestens einen Bildsensor 22 ab. Der Bildsensor 22 setzt das über die Optik 21 auf ihn projizierte Bild in ein digitales oder analoges Bildsignal, z.B. als zeitlicher Spannungsverlauf, um. Ein ursprünglich analoges Bildsignal kann dann durch Analog-Digital-Wandler (ADC) in ein digitales Bildsignal umgewandelt werden.
Aufgrund der einfacheren Handhabbarkeit besteht das Bildsignal bevorzugt aus einer Vielzahl, typischerweise einer zeitlichen Abfolge, digitaler Signale, wobei jedes digitale Signal einem Pixel der Bildszene 20 oder einer Gruppe bestehend aus wenigen, einander benachbarten Pixel zugeordnet ist; für nähere Informationen sei verweisen auf Junichi Nakamura (Editor): "Image Sensors and Signal Processing for Digital Still Cameras", Taylor & Francis Group, Boca Raton, 2006.
Falls erforderlich wird das Bildsignal bzw. die Bilddaten rechnerisch von der Datenverarbeitungseinrichtung 27, z.B. einem Digitalen Signalprozessor (DSP) oder einem sogenannten "Field Programmable Gated Array (FPGA)" verarbeitet bzw. aufbereitet.
Anschließend kann das Bildsignal in Echtzeit über einen Übertragungskanal, z.B. über ein Kabel 25, eine Funkverbindung oder dergleichen, ausgegeben werden, wie dies z.B. bei Überwachungskameras gebräuchlich ist. Alternativ oder zusätzlich kann das Bildsignal in Form digitaler Bilddaten in der Digitalkamera 23 gespeichert und zu einem späteren Zeitpunkt mittels Übertragung, z.B. durch das Kabel 25, ausgegeben werden, wie dies beispielsweise bei den bekannten digitalen Fotoapparaten gebräuchlich ist. Die Ausgabe der Bilddaten aus der Digitalkamera kann auch dadurch erfolgen, dass sie auf einem Speichermedium gespeichert sind, welches durch einen Benutzer aus der Digitalkamera entnommen wird.
Der Bildsensor 22 der Digitalkamera 23 kann so ausgeführt sein, dass er in der Lage ist, verschiedene Farben zu unterscheiden. Dies lässt sich mittels einer regelmäßige Anordnung lichtempfindlicher Elemente, welche auch als Pixel bezeichnet werden, auf dem Bildsensor 22 erreichen. Zur Realisierung eines Farbbildsensors können die einzelnen Pixel des Bildsensors 22 Farbfilter aufweisen, welche die spektrale Empfindlichkeit des jeweiligen Pixels so einschränken, dass der Pixel für vorbestimmte Lichtwellen, d.h. Farben, empfindlicher ist als für andere. Derartige Farbfilter können technisch als farbige Beschichtung in einer regelmäßigen Anordnung, wie z.B. in der US 3,971,065 ausgeführt, realisiert werden. Eine regelmäßige Anordnung der farbselektiven Pixel wird auch als Mosaikfilter bezeichnet. Alternativ können auch Prismen als Farbfilter zum Einsatz kommen. Pixel mit gleichen Farbfiltern werden hier begrifflich als Pixelgruppe einer Farbe zusammengefasst.
Die Farbe, in der beispielsweise eine rote Signallampe im Bild erscheint, ist insbesondere abhängig von der Helligkeit der roten Signallampe. Mit zunehmender Helligkeit kann es zu einer Überbelichtung kommen. Falls eine Überbelichtung vorliegt, variiert die Farbe der roten Signallampe im Bild abhängig vom Grad der Überbelichtung zwischen Rot, Gelb und Weiß. Die Farben Rot und Weiß werden hierbei vom Betrachter im Allgemeinen als korrekt empfunden, während die Farbe Gelb fehlerhaft ist und zu Fehlinterpretationen führen kann. Folglich sollte ein Auftreten der Farbe Gelb vermieden werden.

Ergänzend sei erwähnt, dass der vorstehend für rote Signallampen erläuterte Effekt auch bei andersfarbigen Lampen oder Objekten auftritt und dazu führt, dass helle Farben bei zunehmender Helligkeit und damit verbundener Überbelichtung in eine benachbarte Sekundärfarbe übergehen, bevor sie beginnen, weiß zu erscheinen. So erscheinen z.B. grüne Signallampen bei zunehmender Überbelichtung zunächst in der Farbe Cyan, bevor sie ins Weiß übergehen. Das gleiche gilt auch für andere Objekte, die nicht notwendigerweise selbstleuchtend sein müssen. So können beispielsweise auch reflektierend Objekte, z.B. rote Reflektoren, sehr viel heller erscheinen als die umgebende Bildszene.

Die beschriebenen sättigungsbedingte Fehlfarben können vermieden werden, indem lokale Überbelichtungen vermieden werden. Dies kann zunächst dadurch geschehen, dass eine kürzere Belichtungszeit oder eine geringere Signalverstärkung gewählt wird. Nachteilig ist aber dabei, dass hierdurch das Bild insgesamt dunkler erscheint und die Erkennbarkeit der umgebenden Szene sich verschlechtert.

Der Nachteil des insgesamt dunkleren Bildes kann bei weiterhin kürzerer Belichtungszeit oder geringerer Signalverstärkung teils durch eine nichtlineare Übertragungskennlinie, eine Gammakurve, einen sogenannten Histogrammausgleich oder ein bekanntes "Gamut-Mapping"-Verfahren, ausgeglichen werden. Hierdurch werden dunklere Bildpartien der umgebenden Szene aufgehellt und können besser erkannt werden. Nachteilig ist aber, dass die kürzere Belichtungszeit oder die geringere Signalverstärkung zu einem Absinken des Signal-Rausch-Verhältnisses führt, welches durch keines der genannten Verfahren kompensiert werden kann. Dies führt zu einem vom Betrachter als nachteilig empfundenen Verlust an Bildqualität.

Es kann weiterhin die Helligkeit der umgebenden Szene an die Helligkeit der roten Signalleuchte angepasst werden. Dies könnte durch zusätzliche Beleuchtung geschehen. Nachteilig daran sind der zu erwartende Material- und Energieaufwand für die notwendige zusätzliche Beleuchtung. Oftmals werden aber lokale Gegebenheiten, z.B. Veränderungen des Tageslichtes bei Anwendungen, welche Tageslicht erfordern, diese Art der Lösung nicht zulassen.

Weiter könnten rote Signalleuchten abgedunkelt werden. Dies würde jedoch die Erkennbarkeit der roten Signalleuchte verschlechtert und ist daher nicht praktikabel.

Auch kann der Dynamikumfang der Kamera vergrößert werden. So sind Verfahren bekannt, bei denen eine Erweiterung des Dynamikumfanges durch Mehrfachbelichtung, d.h. kurz aufeinander folgende Belichtungen mit unterschiedlicher Belichtungszeit, erzielt wird. Nachteilig daran ist der damit verbundene erhöhte Aufwand. Weiterhin nachteilig ist, dass die Anwendung von Mehrfachbelichtungen bei gleichbleibender maximaler Bildrate des Bildsensors einerseits die resultierende Bildrate der Kamera herabsetzt. Drittens geht bei aufeinander folgenden Belichtungen die Gleichzeitigkeit der aufgenommenen Bildinformation verloren, was einerseits zu nachteiligen Bewegungsartefakten führen kann und andererseits zu Fehlinterpretationen, wenn Bildinhalte nicht mehr zeitlich einander zugeordnet werden können. Auch sind Probleme mit Bildartefakten im Übergangsbereich zwischen beiden Belichtungen bekannt.

Schließlich ist bekannt, dass eine Erweiterung des Dynamikumfanges durch Verwendung von Digitalkameras mit nichtlinearer Kennlinie erzielt werden kann. Nachteilig daran ist, dass solche Kameras im Allgemeinen teurer sind oder eine schlechtere Bildqualität liefern als digitale Kameras mit linearer Kennlinie. Darüber schränkt die nichtlineare Kennlinie die Vielfalt der Bildsensor- und Kameramodelle empfindlich ein.

Somit kann eine Aufgabe darin bestehen, ein Verfahren bereitzustellen, mit dem bei Sättigung einzelner Primärfarbwerte in einzelnen Bildpunkten auftretende Farbfehler korrigiert werden können.


**Kurze Beschreibung einer Lösung**


Die oben genannte Aufgabe kann durch ein Verfahren zur Korrektur überbelichteter Bildpunkte in einem digitalen Farbbild gemäß Anspruch 1, ein entsprechendes Computerprogramm bzw. Konfigurationsprogramm gemäß Anspruch 22 bzw. 23, einen Datenträger gemäß Anspruch 24 sowie eine Digitalkamera zur Aufnahme digitaler Farbbilder gemäß Anspruch 25 gelöst werden.

Vorteilhafte Weiterbildungen und Ausführungsbeispiele sind in jeweiligen zugeordneten Unteransprüchen angegeben.

Das erfindungsgemäße Verfahren korrigiert überbelichtete Bildpunkte in einem digitalen Farbbild, wobei der Farbton eines Bildpunktes durch Farbwerte vorbestimmter Primärfarben eines Farbraumes bestimmt ist. In einer bestimmten Ausführung korrigiert das Verfahren eine Überbelichtung einer vorbestimmten Zielfarbe, die beispielsweise eine bestimme erste Primärfarbe, wie die Farbe Rot, ist, aber auch eine andere beliebige Mischfarbe sein kann.

Das Verfahren weist hierzu grundsätzlich die folgenden Schritte auf: Zuerst wird für einen betrachteten Bildpunkt festgestellt, ob eine Überbelichtung vorliegt. Dies kann bevorzugt dadurch erreicht werden, dass überprüft wird, ob der Farbwert wenigstens einer der Primärfarben, aus der sich die Zielfarbe zusammensetzt, gleich ist, größer ist oder auch größer oder gleich einem vorbestimmten Maximalwert ist.

Wenn festgestellt wurde, dass die Zielfarbe des Bildpunkts überbelichtet ist, wird in dem Verfahren mindestens ein an den betrachteten bzw. an angrenzende weitere, überbelichtete Bildpunkte angrenzender, nicht überbelichteter Bildpunkt gesucht bzw. herangezogen. Aus den Primärfarbwerten dieses mindestens einen nicht überbelichteten Bildpunktes wird dann mindestens ein korrigierter Primärfarbwert für den überbelichteten Bildpunkt berechnet und der vorhandene Wert des überbelichteten Bildpunktes damit korrigiert. Mit anderen Worten mit dem Verfahren wird ein korrekter Farbton für den als überbelichtet identifizierten Bildpunkt eingestellt.

Der Kerngedanke der hier vorgestellten Lösung besteht in der Erkenntnis sowie den darauf aufbauenden Überlegungen, dass beispielsweise rote Signalleuchten häufig so ausgeführt sind, dass ihre Helligkeit in der Mitte der Leuchtfläche am größten ist und zum Rand hin abnimmt. Bei transparenten Glühfadenlampen ist dies beispielsweise dadurch bedingt, dass in der Mitte der Glühfaden sichtbar ist, während am Rand nur Streulicht wahrgenommen wird. Auch bei einer Leuchtdiode (LED) kann diese Eigenschaft beobachtet werden. Selbst bei homogenen Lampen gibt es im Randbereich häufig Reflektionen, die den gleichen oder einen ähnlichen Farbton mit geringerer Helligkeit wiedergeben. Erfindungsgemäß wird also wenigstens ein Bildpunkt aus diesem nicht überbelichteten Randbereich verwendet, um die überbelichteten Bildpunkte zu korrigieren.

### Kurze Beschreibung der Zeichnungen

Weitere vorteilhafte Ausgestaltungen der Erfindung, sowie ein Ausführungsbeispiel hierzu, werden nachstehend in Verbindung mit der beigefügten Zeichnungsfigur näher erläutert. Die innerhalb der Beschreibung des Ausführungsbeispiels verwendeten Begriffe "links", "rechts", "oben", "unten" beziehen sich auf die Zeichnungsfigur in einer Ausrichtung mit normal lesbaren Figurenbezeichnung und Bezugszeichen.

Fig. 1    veranschaulicht ein bekanntes Setup, in dem eine Digitalkamera ein Farbbild einer Bildszene aufnimmt, verarbeitet und ausgibt;

Fig. 2    veranschaulicht die Farben der Eckpunkte des RGB-Farbraumes;

Fig. 3    veranschaulicht beispielhaft die spektrale Empfindlichkeit von drei verwendeten Pixelgruppen für die Primärfarben Rot, Grün und Blau eines Bildsensors einer Digitalkamera;

Fig. 4    veranschaulicht ein Beispiel für digitale Sättigung, bei der der Eingangswert auf die untere Grenze I=0 und die obere Grenze h=255 eines mittels 8 Bit gebildeten digitalen Wertbereich abgebildet wird;

Fig. 5    zeigt eine Bildszene mit einer roten Signallampe und einer umgebenden Szene;

Fig. 6    veranschaulicht entstehenden Farbbereiche durch sukzessives Sättigen verschiedener Farbkanäle;

Fig. 7    zeigt einen Ausschnitt eines Bildes mit überbelichteten Pixel;

Fig. 8    veranschaulicht einen zeitlichen Verlauf der Signale U für nicht korrigierte Farbwerte R, G, B und korrigierte Farbwert G' einer Bildzeile eines digitalen Farbbildes über einen Pixelindex i;

Fig. 9    veranschaulicht eine Begrenzung der Anwendung des Korrekturverfahrens auf einen vorbestimmten Bildbereich; und

Fig. 10   veranschaulicht schematisch den Aufbau einer Digitalkamera, die eine Bildszene aufnimmt, verarbeitet und ausgibt, mit einer möglichen Integration der Erfindung.

In den Bildsensoren von Digitalkameras werden häufig drei oder vier verschiedene Sorten von Farbfiltern vorgesehen, denen gleich viele Pixelgruppen je einer Farbe zugeordnet sind. Ohne die vorliegende Erfindung auf einen bestimmten Farbraum zu beschränken wird die Erfindung im Folgenden im Wege eines Beispieles anhand des RGB-Farbraumes erläutert. Ein Fachmann ist ohne Weiteres in der Lage das Prinzip der erfindungsgemäßen Lösung zur Korrektur von Farbverschiebungen auf andere Farbräume zu übertragen. Besonders gebräuchlich sind ohne Anspruch auf Vollständigkeit Farbräume basierend auf den (Primär-)Farbkombinationen: Rot, Grün und Blau (RGB), oder Rot, Grün, Blau und Weiß (RGBW), oder Cyan, Magenta und Gelb (CMY), oder Cyan, Magenta, Gelb und Grün (CMYG).

Gemäß dem hier gewählten Beispiel sind daher die im Bildsensor an den einzelnen Bildelementen verwendeten Farbfilter für eine erste Primärfarbe Rot (R), eine zweite Primärfarbe Grün (G) und eine dritte Primärfarbe Blau (B) des RGB-Farbraumes eingerichtet. Durch, z.B. additives, Mischen jeweils zweier Primärfarben im RGB-Farbraum erhält man eine jeweilige Sekundärfarbe, welche als Cyan (C), Magenta (M) und Gelb (Y) bezeichnet werden. Für die Sekundärfarben im RGB-Farbraum gilt:

$$R + G = Y;$$

$$G + B = C;$$

$$B + R = M.$$

Das additive Mischen aller drei Primärfarben im RGB-Farbraum ergibt Weiß (W), d.h.

$$R + G + B = W.$$

Fig. 2 veranschaulicht den Farbraum eines RGB-Sensors, wobei die Primärfarben Rot, Grün und Blau einen Vektorraum aufspannen, der Ecken mit den Farben Schwarz (K), Rot (R), Gelb (Y), Grün (G), Cyan(C), Blau (B), Magenta (M) und Weiß (W) aufweist.

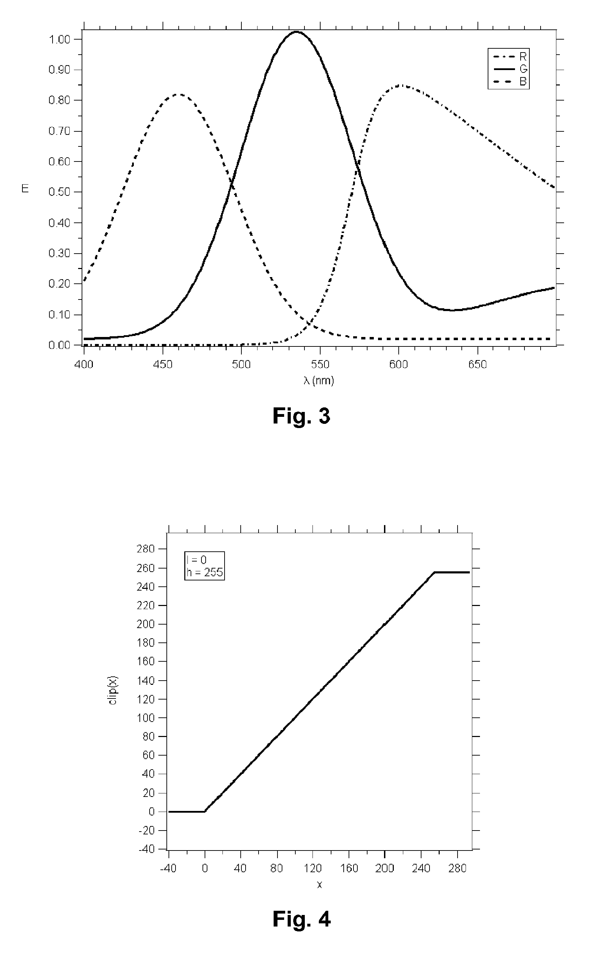

Fig. 3 zeigt beispielhaft die spektrale Empfindlichkeit der Pixel bzw. Bildelemente für einen RGB-Bildsensor für eine Digitalkamera. Gemäß dem hier gewählten Beispiel ist der Bildsensor gemäß dem RGB-Farbraum konzipiert, sodass der Sensor drei Pixelgruppen für die jeweilige Primärfarbe Rot (R), Grün (G) und Blau (B) aufweist. In der Fig. 3 sind die Pixel der Pixelgruppe R, beispielsweise mittels eines am bzw. im Pixel vorgesehenen Farbfilters, so eingerichtet, dass sie für Licht solcher Wellenlängen eine besonders hohe Empfindlichkeit aufweisen, die vom menschlichen Betrachter als rot empfunden werden; entsprechend sind Pixel der Pixelgruppe G für Licht solcher Wellenlängen besonders empfindlich, das als grün, und Pixel der Pixelgruppe B für Licht solcher Wellenlängen besonders empfindlich, das als blau empfunden wird.

Die spektrale Empfindlichkeit E jeweils einer Pixelgruppe ergibt sich aus einer Überlagerung der spektralen Transmissionskurven der Farbfilter und der Empfindlichkeit der Pixel ohne Farbfilter. Einfallendes Licht wird vom jeweiligen Bildelement des Sensors, d.h. einem Bildpunkt bzw. Pixel, in ein, bevorzugt elektrisches, Signal U umgewandelt.

Gemäß seiner Farbe weist einfallendes Licht eine entsprechende spektrale Zusammensetzung auf, die von den verschiedenen Pixelgruppen für Rot, Grün und Blau jeweils mit mindestens einem zugeordneten Signal U detektiert wird. Das sich dabei ergebende Signal hängt somit von der Farbe - die sich mit dem Wellenlängenintegral über dem Produkt des Spektrums des einfallenden Lichts mit der spektralen Empfindlichkeit der jeweiligen Pixelgruppe beschreiben lässt - und von einer für diese Pixelgruppe gewählten Verstärkung und schließlich von der gewählten Belichtungszeit T ab.

Um ein komplettes Farbbild zu erhalten, können zusätzlich für jeden Bildpunkt bzw. Pixel - sofern erforderlich - die fehlenden Farbinformation mittels eines Interpolationsverfahren, beispielsweise einer sogenannten Color Filter Array (CFA) Interpolation, wie z. B. in der US 4,630,307, ermittelt werden. Als Ergebnis liegt dann für jeden Bildpunkt ein Farbvektor im Farbraum vor, welcher gemäß dem hier gewählten Beispiel als RGB-Farbvektor bezeichnet wird und somit aus den Farbwerten Rot (R), Grün (G), und Blau (B) besteht.

Hier sei angemerkt, dass dem Fachmann weitere Farbräume bekannt sind, in welche ein solcher RGB-Farbvektor übertragen bzw. umgerechnet werden kann. Hier seien ohne Anspruch auf Vollständigkeit als Beispiele der YUV-Farbraum, der Standard-RGB (sRGB)-Farbraum oder der L*a*b*-Farbraum genannt. Weiterhin ist bekannt, Farben mittels einer Farbmatrix, wie z.B. im US 5,668,596 dargestellt, zu korrigieren.

Dem RGB-Farbvektor ist weiter ein Farbton H zugeordnet. Der HSV-Farbraum ist ein Farbraum, bei denen man die Farbe mit Hilfe des Farbtons (englisch "hue"), der Farbsättigung (englisch "saturation") und des Hellwerts (bzw. der Dunkelstufe) (englisch "value") definiert. Dabei gibt es jeweilige Berechnungsvorschriften für den Farbton, der sich jeweils aus einem linearen oder nichtlinearen Verhältnis der Werte der Komponenten des Farbvektors zueinander ergibt. Beispielsweise ergibt sich gemäß der Berechnungsvorschrift für den HSV-Farbraum H als:

$$H = 0°, \text{ falls } R = G = B;$$

$$H = 60° * (0 + (G-B) / ( \max(R, G, B) - \min(R, G, B) ) ), \text{ falls } R = \max(R, G, B);$$

$$H = 60° * (2 + (B-R) / ( \max(R, G, B) - \min(R, G, B) ) ), \text{ falls } G = \max(R, G, B);$$

$$H = 60° * (4 + (R-G) / ( \max(R, G, B) - \min(R, G, B) ) ), \text{ falls } B = \max(R, G, B).$$

Es sei ergänzt, dass ähnliche Definitionen zu einem HSL-Farbraum mit der relativen Helligkeit (englisch "lightness"), einem HSB-Farbraum mit der absoluten Helligkeit (englisch "brightness") und einem HSI-Farbraum mit der Lichtintensität (englisch "intensity") führen.

Weiterhin ist dem RGB-Vektor eine Farbsättigung S zugeordnet. Auch die Farbsättigung errechnet sich jeweils aus einem linearen oder nichtlinearen Verhältnis der Farbwerte zueinander. z.B. gilt im HSV-Farbraum:

$$S = 0, \text{ falls } R = G = B;$$

$$S = ( \max(R, G, B) - \min(R, G, B) ) / \max(R, G, B).$$

Auch hier sei ergänzt, dass mehrere Farbräume bekannt sind, welche jeweils eine Berechnungsvorschrift für die Farbsättigung aufweisen.

Sowohl analoge als auch digitale Signalwerte sind grundsätzlich, insbesondere in technischen Systemen, in ihrem Wertebereich beschränkt. Die Grenzen des Wertebereichs sind durch einen Minimalwert (I) und ein Maximalwert (h) bestimmt. Für den Fall eines digital arbeitenden Systems kann beispielsweise ein mittels 8 Bit dargestellter digitaler Wert nur 256 verschiedene diskrete Werte annehmen. Üblicherweise umfasst der Wertebereich dann die Werte zwischen dem Minimalwert I=0 bis zum Maximalwert h=255.

Es gibt auch Fälle, bei denen der Wertebereiches durch technische Gegebenheiten bestimmt ist, z.B. weil das Ausgangssignal eines Verstärkers dessen Versorgungsspannungen nicht über- bzw. unterschreiten kann. Bildsensoren deren jeweilige Pixel beispielsweise als "Charge Coupled Device" (CCD) oder "Complementary Metal Oxide Semiconductor" (CMOS) realisiert sind, weisen häufig eine sogenannte "Full Well"-Kapazität auf, welche näherungsweise die Anzahl der Elektronen angibt, die ein solcher Pixel bzw. ein solches Bildelement aufnehmen kann. Aus dem dieser Anzahl von Elektronen zugeordneten Signal ergibt sich der Maximalwert h für das Signal. Die daraus resultierende Beschränkung auf den Wertebereich von I bis h wird als analoge Sättigungsfunktion bezeichnet.

Es gibt andere Fälle, in denen eine Überschreitung des Wertebereichs zu nachteiligem Verhalten, z.B. zu Bildartefakten durch Datenüberlauf, führt. Um dies für digitale Signalwerte zu vermeiden, kann eine digitale Sättigungsfunktion vorgesehen werden, welche vom Fachmann häufig als Clipping bzw. Clipping-Funktion (clip), bezeichnet wird. Eine solche digitale Sättigungsfunktion ersetzt Signalwerte, die kleiner sind als I durch I und/oder Werte, die größer sind als h durch h. Eine Clipping-Funktion lässt sich z.B. folgendermaßen formulieren:

$$\text{clip} (x) = \max(I, \min(h, x))$$

Wenn ein Eingangswert x, der größer oder gleich h ist, durch eine Sättigungsfunktion auf h begrenzt wird, wird das daraus resultierende Ausgangssignal als gesättigt bezeichnet. Der Vorgang, dass der Eingangswert x den Maximalwert h überschreitet, wird als Sättigung bezeichnet.

Fig. 4 veranschaulicht ein Beispiel für digitale Sättigung, bei der der Eingangswert auf die untere Grenze I=0 und die obere Grenze h=255 eines mittels 8 Bit gebildeten digitalen Wertbereich abgebildet wird.

Für eine richtige Auswertung des Inhalts eines aufgenommenen Bildes ist regelmäßig bei bzw. vor der Wiedergabe des Bildes eine Korrektur einzelner Farben von Signallampen durch digitale Farbkameras notwendig, da es in der Praxis bei der Abbildung farbiger Signallampen durch Digitalkameras u.a. aufgrund der vorstehend genannten Sättigungseffekte zu Farbfehlern kommt. Besonders häufig kann beobachtet werden, dass rote Lampen im Bild von Digitalkameras gelb erscheinen und grüne Lampen türkisfarben (cyan). Darüber hinaus können auch weitere Farbfehler in Abhängigkeit des einfallendes Lichts und der verwendeten Digitalkamera beobachtet werden. Diese Farbfehler sind grundsätzlich problematisch für die korrekte Beurteilung des Bildinhalts. Weiterhin werden solche Farbfehler vom Betrachter als störend empfunden.

Im Folgenden sei das Zustandekommen eines mit dem erfindungegemäßen Verfahren korrigierbaren Farbfehlers bei der Aufnahme von farbigen Lampen am Beispiel einer roten Signallampe - ohne die Erfindung auf die Korrektur in einer Aufnahme verfälschter roter Signallampen zu beschränken - beschrieben.

Eine rote Signallampe führt ungeachtet jeglicher Sättigung zunächst zu einem Farbvektor, dessen Farbwert für die Primärfarbe Rot (R) der höchste ist, d.h. größer als der der Primärfarbe Grün (G) und größer als der der Primärfarbe Blau (B) ist. Entsprechend den üblichen spektralen Kurven roter Signallampen und der im Zusammenhang mit Fig. 3 beschriebenen Empfindlichkeit der Bildsensoren von Digitalkameras ist es häufig der Fall bzw. sei an dieser Stelle angenommen, dass G der zweithöchste Wert und somit größer als der kleinste Wert B ist.

$$R > G > B$$

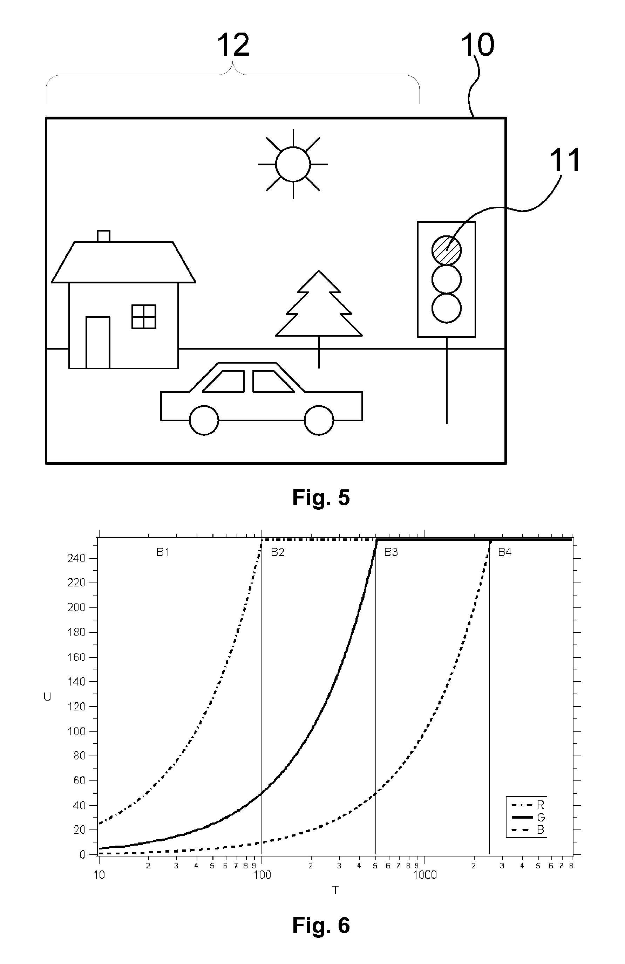

Fig. 5 zeigt eine Bildszene 10 mit einer roten Signallampe 11 und einer umgebende Szene 12. Zusätzlich zur roten Signallampe 11 nimmt die Digitalkamera 23 auch die umgebende Szene 12 auf, auf der weitere Personen, Gegenstände und Sachverhalte zu sehen sind. Dabei werden zumeist Belichtungszeit und Verstärkung so gewählt, dass die umgebende Szene ebenfalls gut zu erkennen ist. Dies ist dann der Fall, wenn die Farbsignale der umgebenden Szene möglichst vollständig den zur Verfügung stehenden digitalen Wertebereich von I bis h ausnutzt.

Rote Signallampen sind zumeist technisch so ausgeführt, dass sie von einem menschlichen Betrachter gut und schnell erkannt werden. Dies ist insbesondere dann der Fall, wenn sie deutlich heller sind als die umgebende Szene, da sie vom menschlichen Auge dann bevorzugt wahrgenommen werden.

Wenn die rote Signallampe deutlich heller ist, als die umgebende Szene und die Digitalkamera hinsichtlich Belichtungszeit und Verstärkung so eingestellt ist, dass die umgebende Szene den Wertebereich ihres Signals möglichst vollständig ausnutzt, so führt dies dazu, dass das der roten Signallampe zugeordnete Signal den Wertebereich überschreitet, d.h. mindestens ein Farbwert gesättigt ist. Aufgrund des Zusammenhanges R>G>B ist bei zunehmender Helligkeit der Lampe zunächst R gesättigt, nachfolgend G und zuletzt B.

Eine zunehmende Helligkeit der Lampe kann hierbei durch eine Erhöhung der Leuchtkraft der Lampe, durch eine Vergrößerung der Belichtungszeit der Digitalkamera oder durch eine Vergrößerung der Verstärkung der Digitalkamera erzielt werden.

Fig. 6 veranschaulicht die entstehenden Farbbereiche durch sukzessives Sättigen der verschiedenen Farbkanäle R, G und B. Dadurch definieren sich vier Bereiche in Abhängigkeit der zunehmenden Helligkeit der Lampe: Im Bereich B1 ist noch kein Primärfarbwert gesättigt, im Bereich B2 ist nur der Primärfarbwert R gesättigt, im Bereich B3 sind die Primärfarbwerte R und B gesättigt, und im Bereich B4 sind alle Primärfarben gesättigt.

Damit ist zu erkennen, dass während im Bereich B1 der korrekte Farbwert H vorliegt, die aufeinanderfolgende Sättigung der Farbkanäle in den Bereichen B2, B3 und B4 zu einer Veränderung des Farbtons H und der Farbsättigung S mit sich bringt. So geht im Bereich B2 der resultierende, der roten Signallampe zugeordnete Farbwert allmählich in Gelb über und in B3 das Gelb allmählich in Weiß. In B4 findet keine weitere Veränderung im Weiß mehr statt.

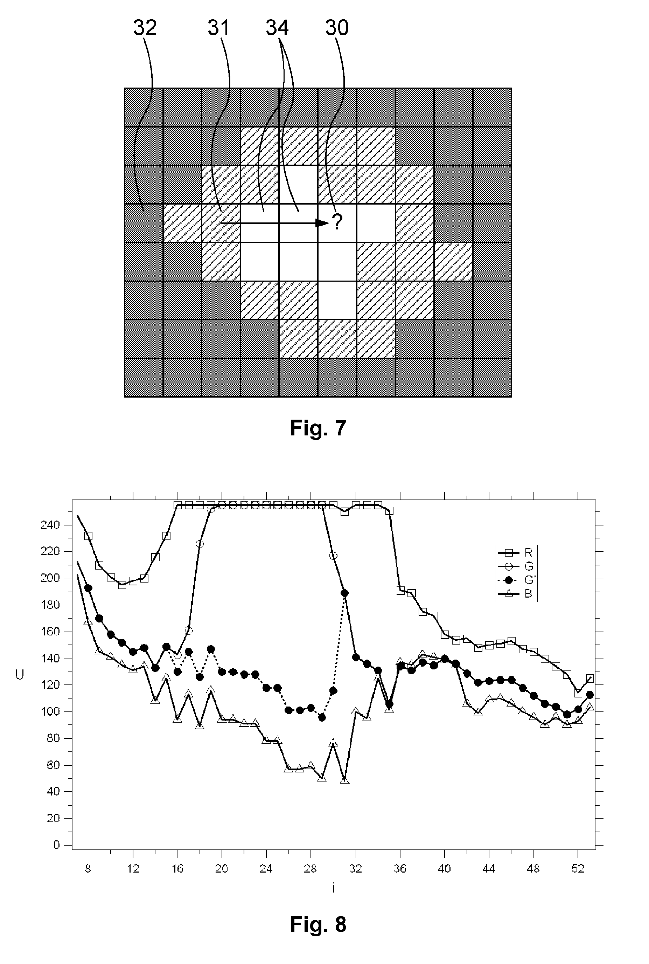

Fig. 7 zeigt einen Ausschnitt eines Bildes, z. b. eines Teilbereiches, der die rote Signallampe 11 der Bildszene 10 der Fig. 5 enthält, mit überbelichteten Pixel 30, 34. Dabei wurde vom Erfinder erkannt, dass die überbelichteten Pixel 30, 34 häufig von nicht überbelichteten Pixeln 31 mit gleichem oder ähnlichem Farbton umgeben sind. Um die Pixelgruppe mit den Pixel 30, 31 und 34 befindet sich Pixel 32 anderer Farbe der umgebenden Szene.

Vor einer erfindungsgemäßen Korrektur eines möglicherweise überbelichteten Bildpunktes bzw. Pixels 30 mit Primärfarbwerten R, G und B wird nun zunächst festgestellt, ob eine Überbelichtung einer Zielfarbe, d.h. hier im Beispiel der Primärfarbe R vorliegt. Dies kann z.B. anhand eines (Überbelichtungs-)Kriteriums festgestellt werden, ob die Werte für R und h übereinstimmen. Alternativ kann das Kriterium auch darin bestehen, ob der Wert für R größer als h ist bzw. ob der Wert für R größer oder gleich h ist.

Ist dies der Fall, d.h., dass Überbelichtungskriterium ist erfüllt, wird als erster Schritt einer Korrektur mindestens ein an diesen oder an angrenzende weitere, überbelichtete Pixel 34 angrenzender, nicht überbelichteter Pixel 31 mit Primärfarbwerten R0, G0 und B0 als Referenzpixel bzw. Referenzbildpunkt gesucht. Mit anderen Worten kann es vorkommen, dass der aufzufindende angrenzende, nicht überbelichtete Pixel möglicherweise nicht unmittelbar an den aktuell betrachteten überbelichteten Pixel angrenzt.

Im daran sich anschließenden zweiten Schritt der Korrektur wird aus den Primärfarbwerten R0, G0 und B0 des mindestens einen nicht überbelichteter (Referenz-)Pixels 31 - soweit jeweils erforderlich - ein korrigierter Primärfarbwert R' und/oder G' und/oder B' für den bzw. die überbelichteten Pixel rechnerisch ermittelt und der jeweilige ursprüngliche Farbwert dadurch ersetzt. Dies wird hier unter Korrektur verstanden.

Der Vollständigkeit halber sei angemerkt, dass für den Fall, dass keine Überbelichtung vorliegt, eine Korrektur des Farbvektors natürlich nicht erforderlich ist.

Vorzugsweise wird die Korrektur auf solche Bildpunkte bzw. Pixel beschränkt, in denen der überbelichtete Pixel einen Farbton aus einem bestimmten Zielfarbbereich besitzt. Beispielsweise kann zur Korrektur des Bildes roter Signallampen der möglicherweise korrekturbedürftige Zielfarbbereich auf den Bereich von Rot bis Gelb beschränkt werden. Dieser Bereich kann durch ein entsprechendes (Zielfarbbereichs-)Kriterium vorbestimmt werden. So kann der Zielfarbbereich von Rot bis Gelb dadurch bestimmt werden, dass dort: (i) der Farbwert für die Primärfarbe Rot "größer" bzw. "größer oder gleich" dem Primärfarbwert für die Primärfarbe Grün ist und (ii) der Farbwert für die Primärfarbe Grün "größer" bzw. "größer oder gleich" dem Primärfarbwert für die Primärfarbe Blau ist. Dies ist insbesondere unabhängig von der Frage, ob die Primärfarbe Grün in Sättigung ist.

In einer Korrekturvariante werden im Schritt der rechnerischen Ermittlung die korrigierten Farbwerte G' und/ oder B' für die zu korrigierenden Primärfarben Grün und/oder Blau so berechnet, dass der korrigierte Farbvektor den gleichen oder einen ähnlichen Farbton aufweist, wie der aufgefundene angrenzende, nicht überbelichtete oder die angrenzenden, nicht überbelichteten Pixel.

In einer weitern Korrekturvariante werden im Schritt der rechnerischen Ermittlung die korrigierten Farbwerte G' und/oder B' für die zu korrigierenden Primärfarben Grün und/oder Blau so berechnet, dass der resultierende Farbvektor des korrigierten Bildpunktes bzw. Pixel auf einen vorbestimmten Zielkorrekturfarbbereich begrenzt wird. Hier ist es besonders vorteilhaft, wenn dieser Zielkorrekturfarbbereich der gleiche ist, dem der überbelichtete Pixel angehört, d.h. der Zielkorrekturfarbbereich dem Zielfarbbereich entspricht. So kann im vorliegenden Beispiel für den Fall, dass der Farbwert der Zielprimärfarbe Rot gesättigt ist, d.h. R=h ist, und der Farbwert G der Primärfarbe Grün größer als der Farbwert B der Primärfarbe Blau ist, der korrigierte Farbwert G' für die Primärfarbe Grün, falls ein zuvor berechnetes, erstes Ergebnis für den der korrigierten Farbwert G' für die Primärfarbe Grün kleiner als der Farbwert B der Primärfarbe Blau ist, auf den Farbwert B gesetzt werden.

In einer weitern Korrekturvariante werden im Schritt der rechnerischen Ermittlung die korrigierten Farbwerte G' und/oder B' für die zu korrigierenden Primärfarben Grün und/oder Blau so berechnet, dass der resultierende Farbvektor sich gegenüber dem ursprünglichen nicht weiter an einem Sekundärfarbpunkt annähert. So kann im vorliegenden Beispiel für den Fall, dass der Farbwert der Zielprimärfarbe Rot gesättigt ist, d.h. R=h ist, und der Farbwert G der Primärfarbe Grün größer als der Farbwert B der Primärfarbe Blau ist, der korrigierte Farbwert G' für die Primärfarbe Grün in dem Fall, dass ein zuvor berechnetes, erstes Ergebnis für den korrigierten Farbwert G' größer G ist, auf G gesetzt bzw. belassen werden. Bevorzugt wird hier der korrigierte Farbwert B' auf dem aktuelle Farbwert B für die Primärfarbe Blau unverändert belassen.

In einem bevorzugten Ausführungsbeispiel werden die korrigierten Farbwerte R', G' und B' gemäß oder äquivalent zu der folgenden Vorschrift berechnet:

$$R' = R;$$

$$G' = B + (G0-B0)/(R0-B0) * (h-B);$$

$$B' = B.$$

Diese Formel wird hier als Rotkorrekturformel bezeichnet. Hierdurch weist der korrigierte Farbvektor des überbelichteten Pixels mit den korrigierten Farbwerten R, G' und B den gleichen Farbton H auf, wie der angrenzende, nicht überbelichtete Pixel, während die Helligkeit und Farbsättigung des korrigierten Farbvektors nicht gegenüber dem Ausgangszustand verändert werden.

Fig. 8 veranschaulicht hierzu einen zeitlichen Verlauf der Signale U für nicht korrigierte Farbwerte R, G, B und den korrigierten Farbwert G' einer Bildzeile eines digitalen Farbbildes über einen Pixelindex i. Die Rotkorrektur wurde dabei bei überbelichteten Pixel jeweils unter Verwendung der Farbwerte des links an mögliche weitere, überbelichtete Pixel angrenzenden, nicht überbelichteten Pixels angewendet. Die Daten entstammen einer realen Aufnahme einer roten LED.

In einer weiteren Korrekturvariante werden im Schritt der rechnerischen Ermittlung der korrigierte Farbwert B' aus B übernommen und der korrigierte Farbwert G' aus einem linken, angrenzenden, nicht überbelichteten Pixel mit dem Farbvektor (RL, GL, BL) und einem rechten, angrenzenden, nicht überbelichteten Pixel mit dem Farbvektor (RR, GR, BR) gemäß der folgenden Vorschrift berechnet:

$$G' = B + ( (GL-BL)/(RL-BL) + (GR-BR)/(RR-BR) )/2 * (h-B)$$

Hierbei wird dem korrigierten Pixel der mittlere Farbton des rechten und linken angrenzenden, nicht überbelichteten Pixels zugewiesen, welcher

$$( (GL-BL)/(RL-BL) + (GR-BR)/(RR-BR) )/2$$

beträgt.

In einer Weiterbildung ist vorgesehen, weitere, angrenzende, nicht überbelichtete Pixel in die Berechnung des mittleren Farbtons mit einzubeziehen.

In einer alternativen Korrekturvariante werden im Schritt der rechnerischen Ermittlung der Farbvektor eines überbelichteten Pixels, welcher vorzugsweise einem bestimmten Zielfarbbereich angehört, so korrigiert, dass ein fester Farbwert H0 zugewiesen wird. Dazu kann beispielsweise die folgende Formel verwendet werden:

$$G' = B + H0 * (h-B)$$

In einer alternativen Korrekturvariante wird im Schritt der rechnerischen Ermittlung des korrigierten Farbwertes G' wird eine gewichtete Mittelung zwischen dem Farbwert G0 des aufgefundenen nicht überbelichteten Pixel und dem zu korrigierenden Farbwert G des überbelichteten Pixel durchgeführt.

In einer Weiterbildung der vorstehend beschreibenden Korrekturvarianten wird sichergestellt, dass im Signalbereich ein kontinuierlicher Übergang zwischen dem nicht korrigierten und dem korrigierten Farbwerten erfolgt. Dies wird dadurch erreicht, dass in Abhängigkeit von h minus R eine gewichtete Mittelwertbildung zwischen dem nicht korrigierten und einem ersten korrigierten Farbvektor erfolgt.

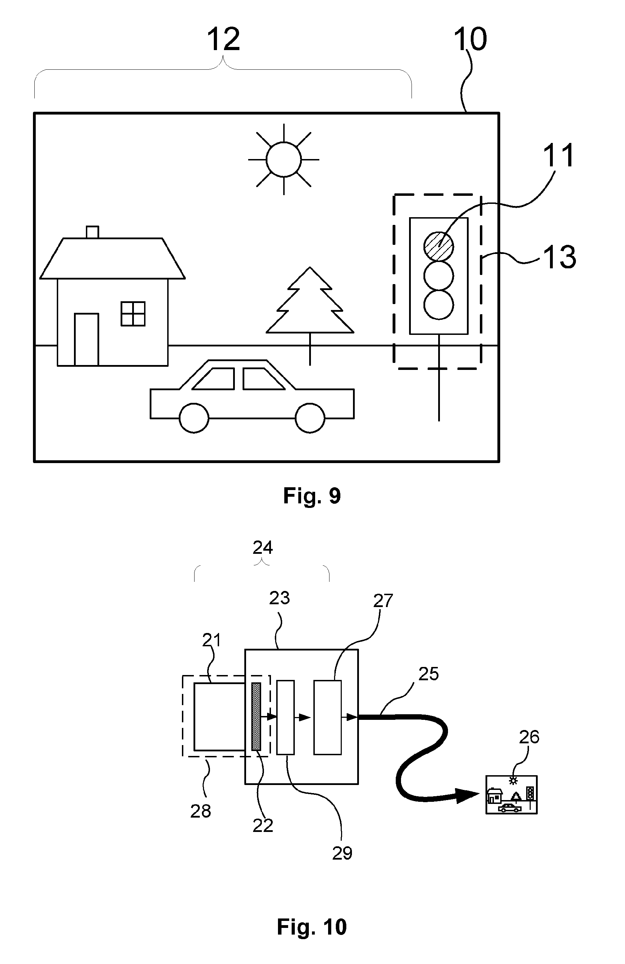

In einer Weiterbildung der vorstehend beschreibenden Korrekturvarianten wird die Anwendung eines der Korrekturverfahren auf vorbestimmte Bildbereiche des aufgenommenen Farbbildes begrenzt. Dadurch können nachteilige Effekte auf andere Bildbereiche vermieden werden. Fig. 9 veranschaulicht eine Begrenzung der Anwendung des Korrekturverfahrens auf einen vorbestimmten Bildbereich 13. Dadurch werden nur die Farbfehler korrigiert, die von der roten Signallampe 11 verursacht werden, während in anderen Bildbereichen, z.B. in der umgebenden Szene 12, keine Korrektur stattfindet.

Zusätzlich können in den vorstehend diskutierten Korrekturvarianten mehrere angrenzende, nicht überbelichtete Pixel verwendet, wobei dann die korrigierten Farbwerte G' und/oder B' für die zu korrigierenden Primärfarben Grün und/oder Blau durch eine Interpolation der Farbwerte der angrenzenden, nicht überbelichteten Pixel berechnet werden.

Zusätzlich können in den vorstehend diskutierten Korrekturvarianten nur solche angrenzenden, nicht überbelichteten Pixel verwendet werden, die sich in der gleichen Zeile oder in der gleichen Spalte des zur korrigierenden digitalen Farbbildes befinden, wie der zu korrigierende überbelichtete Pixel. Dies ist besonders vorteilhaft bei der Korrektur der Bildpunkte, wenn die Bilddaten als fortlaufender Datenstrom übertragen werden, in dem die Bildpunktdaten zeilenweise bzw. spaltenweise vorliegen.

In einer Weiterbildung werden bei der Korrektur von Pixel in einem solchen fortlaufenden Datenstrom, z.B. durch ein FPGA, nur zeitlich vorher im Datenstrom vorhandene angrenzende, nicht überbelichtete Pixel verwendet. Dies besitzt den Vorteil, dass der Datenstrom zur Berechnung nicht verzögert werden muss. Weiterhin ergibt sich hierdurch eine vereinfachte Implementierung.

In einer Weiterbildung werden bei einem solchen fortlaufenden Datenstrom Farbwerte, wie z. B. R0, G0 und B0 oder daraus rechnerisch ermittelte Eigenschaften gespeichert, falls keiner der Farbwerte gesättigt ist, und jeweils nachfolgend zur rechnerischen Korrektur von Farbwerten G und/oder B herangezogen, falls gemäß dem Beispiel der Farbwert R für die Zielprimärfarbe Rot gesättigt ist. Dies hat den Vorteil, dass bei Korrekturbedarf kein Referenzpixel mehr gesucht werden muss.

Wie zu Beginn angemerkt, wurde die vorliegende Erfindung am Beispiel des RGB-Farbraumes als der vorbestimmte Farbraum erläutert, der sich aus Rot als erste Primärfarbe, Grün als zweite Primärfarbe, und Blau als dritte Primärfarbe zusammensetzt. Als Zielfarbe wurde hier die Farbe Rot - gemäß dem Kontext der Beispielsanwendung des erfindungsgemäßen Verfahrens auf eine Signallampe im Straßenverkehr mit der Farbe Rot - gewählt. Somit wurde für einen zu korrigierenden Bildpunkt die Zielfarbe Rot als gesättigt bewertet, wenn Farbwert der Primärfarbe Rot einen technisch bedingten Maximalwert aufweist. Zusätzlich wurde erkannt, dass dabei der Farbwert der zweiten Primärfarbe Grün größer als der Farbwert der dritten Primärfarbe Blau ist.

Im Kontext der Beispielanwendung konnte der Korrekturbereich entsprechend auf den Zielfarbbereich Rot bis Gelb beschränkt werden. Dieser Zielfarbbereich bestimmte sich daher dadurch, dass der Farbwert für die zweite Primärfarbe Grün größer bzw. größer oder gleich dem Farbwert für die dritte Primärfarbe Blau ist.

Hinsichtlich der Übertragung der hier anhand der Zielfarbe Rot veranschaulichten Korrekturverfahren sei nun ergänzend angemerkt, dass es für den Fachmann ohne Weiteres möglich ist, durch Nutzung der Symmetrieeigenschaften des Farbraumes die hier vorgestellten Berechnungsvorschriften zur Korrektur von Farben, für vorbestimmte Zielfarben bzw. Zielfarbbereiche auf andere Zielfarben bzw. Zielfarbbereiche zu übertragen.

So kann beispielsweise im RGB-Farbraum eine Berechnungsvorschrift für Zielfarben, die dem genannten Farbbereich von Rot bis Gelb (mit 0° <= H <=60°) zugeordnet sind, dadurch auf einen Zielfarbbereich von Gelb bis Grün (mit 60° <= H <=120°) übertragen werden, dass in der zugeordneten Berechnungsvorschrift des Korrekturverfahrens jeweils die erste Primärfarbe Rot gegen die zweite Primärfarbe Grün und umgekehrt die zweite Primärfarbe Grün gegen die erste Primärfarbe Rot vertauscht wird.

Auch kann beispielsweise eine Berechnungsvorschrift für Zielfarben, die dem Zielfarbbereich von Rot bis Gelb angehören, auf einen Zielfarbbereich von Grün bis Cyan (mit 120° <= H <= 180°) übertragen werden, indem jeweils zyklisch die erste Primärfarbe Rot durch die zweite Primär Grün, die zweite Primärfarbe Grün durch die dritte Primärfarbe Blau, und die dritte Primärfarbe Blau durch die erste Primärfarbe Rot ersetzt wird. Dadurch kann beispielsweise ein Verfahren zur Farbkorrektur roter Signallampen, die im Bild auf problematische Weise gelb erscheinen, in ein Verfahren zur Farbkorrektur grüner Signallampen, die im Bild auf problematische Weise cyan erscheinen, übertragen werden.

Des Weiteren ist es dem Fachmann durch Nutzung der Symmetrieeigenschaften des Farbraumes möglich, Berechnungsvorschriften für einen ersten Zielfarbbereiche auf einen vorbestimmten zweiten Zielfarbbereiche zu erweitern.

So kann beispielsweise mit einer erweiterten Berechnungsvorschrift durch Größenvergleich der Farbwerte der Primärfarben oder durch Berechnung des Farbtons (H) die Zugehörigkeit eines Farbwertes zu einem von mehreren Farbbereichen ermittelt werden. Anschließend kann in Abhängigkeit von der ermittelten Zugehörigkeit eine von mehreren untergeordneten Berechnungsvorschriften ausgeführt werden.

Beispielsweise kann im Sinne einer erweiterten Berechnungsvorschrift festgestellt werden, ob ein Farbvektor <R, G, B> mit den Farbwerten R, G und B die Bedingung R > G > B erfüllt; dies entspricht einem Zielfarbbereich von Rot bis Gelb und kann zur Farbkorrektur roter Signallampen angewandt werden. Gleichermaßen kann festgestellt werden, ob derselbe Farbvektor der Bedingung G > B > R genügt; dies entspricht dann einem Zielfarbbereich von Grün bis Cyan und kann somit zur Farbkorrektur grüner Signallampen angewandt werden.

Eine erfindungegemäße Digitalkamera 23, beispielsweise wie in Fig. 1 dargestellt, ist Teil eines Kamerasystems 24 zur Aufnahme eines Farbbilds der Bildszene 20. Eine Bildaufnahmesektion 28 besteht im Wesentlichen aus einer Optik 21 und mindestens einem Bildsensor 22. Die Optik 21 bildet die Bildszene 20 auf den mindestens einen Bildsensor 22 ab. Der Bildsensor 22 setzt das über die Optik 21 auf ihn projizierte Bild in ein digitales oder analoges Bildsignal um. Ursprünglich analoge Bildsignale können durch Analog-Digital-Wandlung in ein digitales Bildsignal umgewandelt werden. Hier sei angemerkt, dass es auch Kameras mit ggf. integriertem Objektiv gibt.

In der Digitalkamera 23 der Fig. 10 ist bereits eine programmierbare Datenverarbeitungseinrichtung 27, wie zum Beispiel einen Mikroprozessor oder der gleichen, mit Speicher für ein Computerprogramm mit von der Datenverarbeitungseinrichtung 27 ausführbaren Programmbefehlen vorgesehen, mittels derer beispielsweise die wesentlichen Funktionen der Digitalkamera 23 gesteuert werden.

Eine Möglichkeit, eines der erfindungsgemäßen Verfahren in einer solchen Digitalkamera zu implementieren, besteht darin, das vorhandene Computerprogramm um zusätzliche Programmteile mit (Programmier-)befehlen zu ergänzen. Diese zusätzlichen Programmteile steuern dann die Datenverarbeitungseinrichtung so, dass eine Korrektur von Bildpunkten eines aufgenommenen Bildes gemäß den Vorschriften wenigstens eines der oben beschriebenen Verfahren bewirkt wird, wenn die Datenverarbeitungseinrichtung die zusätzlichen Programmbefehle ausführt.

Alternativ zur vorstehend beschriebenen Umsetzung mittels eines, ggf. bereits vorhandenen, programmierbaren Mikroprozessors oder der gleichen, ist es möglich, dass eines der oben beschriebenen Verfahren direkt mittels einer entsprechenden digitalen elektronischen Schaltung 29, wie in Fig. 10 veranschaulicht, realisiert wird. D.h. das erfindungsgemäße Verfahren wird mittels einer fest verdrahteten Logik bzw. konfigurierbaren Logik implementiert.

Eine solche elektronische Schaltung kann besonders flexibel mittels eines integrierten Schaltkreises der Digitaltechnik implementiert werden, in den eine gewünschte logische Schaltung programmiert werden kann. D.h., zur Integration eines oder mehrerer der erfindungsgemäßen Verfahren können bestehende Digitalkameras an geeigneter Stelle mit mindestens einem programmierbaren Logikbaustein, z. B. einem PLD (engl. Programmable Logic Device), oder einem FPGA (engl. Field Programmable Gated Array), ergänzt werden.

Eine solche elektronische Schaltung 29 kann beispielsweise in die Digitalkamera 23 derart integriert werden, dass der Rohbilddatenstrom, der vom Bildsensor 22 erzeugt wird, sofort einem erfindungsgemäßen Korrekturverfahren unterworfen wird. Alternativ kann eine solche Schaltung auch an anderer Stelle integriert werden. Möglich ist beispielsweise eine alternative Anordnung nach der Datenverarbeitungseinrichtung 27. Eine weitere Möglichkeit besteht in der Integration in die Datenverarbeitungseinrichtung 27, wenn diese ebenfalls mittels programmierbarer Logik wie einem FPGA realisiert ist.

Somit ist alternativ zu einem Computerprogramm die Realisierung eines der hier diskutierten Verfahren mittels einer spezifischen Konfiguration, beispielsweise mit mindestens einem Konfigurationsprogramm oder mindestens einer Konfigurationsdatei, eines oder mehrerer flexibel programmierbaren Logikbausteins möglich. Anders als bei der Programmierung von Computern oder Steuerungen bezieht sich hier der Begriff Programm dann nur in zweiter Linie auf die Vorgabe zeitlicher Abläufe im Baustein, sondern vor allem auf die Definition von dessen Funktionsstruktur. Durch die Programmierung von Strukturvorschriften wird zunächst die grundlegende Funktionsweise einzelner universeller Blöcke im Logikbaustein und deren Verschaltung untereinander festgelegt, d.h. konfiguriert.

In einer Weiterbildung ist die Optik 21 des in Fig. 1 bzw. 10 schematisch veranschaulichten Kamerasystems 24 oder alternativ der Bildsensor 22 als Teil der Digitalkamera 23 mit einem optischen Tiefpassfilter versehen. Ein solcher Tiefpassfilter könnte auch als separates Teil zwischen der Digitalkamera 23 und dem Objektiv 21 bzw. vor dem Objektiv angeordnet werden. Bei den obengenannten Korrekturverfahren kann es nämlich vorkommen, dass sich Fehlfarben in den angrenzenden, nicht überbelichteten Pixel räumlich auf überbelichtete Pixel auszudehnen. Dies kann als Bildartefakt erkennbar werden. Besonders bei Digitalkameras mit Bildsensoren, welche sogenannte Mosaikfilter aufweisen, können solche Fehlfarben durch hohe Raumfrequenzen auftreten, welche sich durch den optischen Tiefpassfilter erfolgreich ohne nennenswerte Nachteile unterdrücken lassen.

Es sei noch angemerkt, dass die Durchführung des Verfahrens - wie vorstehend beschrieben - in einer Datenverarbeitungseinrichtung der Digitalkamera erfolgen kann oder alternativ auch vorgesehen werden kann, dass eines der Korrekturverfahren durch ein separates nachgeordnetes Datenverarbeitungsgerät, z.B. einen Computer, durchgeführt wird. Damit kann die Durchführung des Verfahrens einerseits zur Aufnahmezeit bzw. bei der Aufbereitung des Bildes in der Digitalkamera erfolgen, andererseits auch zu einem späteren Zeitpunkt außerhalb der Digitalkamera.

Zusammenfassend wurden hier Verfahren zur Korrektur von Farbfehlern in digitalen Farbbildern von Digitalkamera, insbesondre digitalen Farbkameras, welche durch die Sättigung einzelner Farbwerte (R, G, B) hervorgerufen werden, offenbart. Solche Farbfehler werden z.B. häufig bei der Abbildung farbiger Signallampen beobachtet. Erfindungsgemäß wurde vorgeschlagen, aus Farbwerten (R, G, B) eines überbelichteten Pixels bzw. Bildpunktes, bei dem mindestens einer der Farbwerte (R, G, B) der Primärfarben in Sättigung ist, unter Verwendung von Farbwerten (R0, G0, B0) der Primärfarben mindestens eines, an den oder an die überbelichteten Pixel angrenzenden, nicht überbelichteten Pixels, korrigierte Farbwerte (R', G', B') für den überbelichteten Pixel rechnerisch zu ermitteln. Damit können auf vorteilhafte und einfache Weise sättigungsbedingte Farbfehler korrigiert werden. Das Korrekturverfahren ist einfach und kann preiswert und mit geringem Arbeits- und Ressourceneinsatz in die Programmierung einer Digitalkamera implementiert werden. Abgesehen von der einmaligen Implementierung fallen keine weiteren Kosten an, insbesondere keine Material- und keine Energiekosten. Das Verfahren ist universell einsetzbar. Es eignet sich sowohl für Flächen- als auch für Zeilenkameras. Das Verfahren ist echtzeitfähig, und kann darüber hinaus auch in einer nachgelagerten Bildbearbeitung eingesetzt werden.

Die voranstehend näher erläuternden Ausführungsbeispiele weisen teilweise unterschiedliche Ausgestaltungsformen und unterschiedliche Detaillösungen auf, jedoch sind sämtliche Ausgestaltungsformen und Detaillösungen auch alternativ oder in Kombination mit den dargestellten, aber auch mit nicht dargestellten und beschriebenen Ausführungsformen im Rahmen der vorliegenden Erfindung denkbar.

**Patentansprüche**

1. Verfahren zur Korrektur überbelichteter Bildpunkte in einem digitalen Farbbild, wobei der Farbton eines Bildpunktes durch Farbwerte vorbestimmter Primärfarben eines Farbraumes bestimmt ist, insbesondere zur Korrektur einer Überbelichtung einer Zielfarbe, wobei das Verfahren die folgenden Schritte aufweist:

   - Feststellen für einen Bildpunkt, ob eine Überbelichtung vorliegt, insbesondere mittels Überprüfen, ob ein den Farbwert einer die Zielfarbe bildenden ersten Primärfarben einem vorbestimmten Maximalwert gleich, größer oder gleich ist, oder übersteigt;
   und, wenn die Zielfarbe des Bildpunkts überbelichtet ist:

   - Auffinden oder Heranziehen mindestens eines an diesen bzw. an angrenzende weitere, überbelichtete Bildpunkte angrenzenden, nicht überbelichteten Bildpunktes; und
   - Berechnen aus Primärfarbwerten (R0, G0, B0) des mindestens einen nicht überbelichtete Bildpunktes mindestens eines korrigierten Primärfarbwerts (R', G', B') für den überbelichteten Bildpunkt
   - wobei die Korrektur vorzugsweise auf solche Fälle beschränkt ist, in denen der überbelichtete Bildpunkt einem bestimmten Zielfarbbereich angehört.

2. Verfahren nach Anspruch 1,
wobei der mindestens eine korrigierte Primärfarbwert (R', G', B') des zu korrigierenden Bildpunktes derart berechnet wird, dass

- ein korrigierter Farbvektor des zu korrigierenden Bildpunktes den gleichen oder einen ähnlichen Farbton aufweist, wie der angrenzende, nicht überbelichtete oder die angrenzenden, nicht überbelichteten Bildpunkte und/oder
- der resultierende Farbvektor auf einen vorbestimmten Zielkorrekturfarbbereich, insbesondere den Zielfarbbereich begrenzt wird.

3. Verfahren nach Anspruch 2,
wobei der korrigierte Farbwert (G') für eine zweite Primärfarbe, falls ein zuvor berechnetes, erstes Ergebnis für den korrigierten Farbwert (G') für die zweite Primärfarbe kleiner als ein aktueller Farbwert (B) einer dritten Primärfarbe (B) ist, auf den aktuellen Farbewert (B) der dritten Primärfarbegesetzt wird.

4. Verfahren nach einem der Ansprüche 1 oder 2,
wobei der mindestens eine korrigierte Primärfarbwert (G', B') so berechnet wird, dass ein resultierender Farbvektor des zu korrigierenden Bildpunktes sich gegenüber dem ursprünglichen nicht weiter an einem Sekundärfarbpunkt annähert.und weiter vorzugsweise der korrigierte Farbwert (G') für eine zweite Primärfarbe, falls ein zuvor berechnetes, erstes Ergebnis für den korrigierten Farbwert (G') für die zweite Primärfarbe größer als ein aktueller Farbwert (G) für die zweite Primärfarbe ist, auf den aktuellen Farbewert (G) der zweiten Primärfarbe gesetzt wird.

5. Verfahren nach einem der Ansprüche 1 oder 2,
wobei im Schritt des Berechnens des mindestens einen korrigierten Primärfarbwerts (R', G', B') für den zu korrigierenden Bildpunkt mehrere angrenzende, nicht überbelichtete Bildpunkte verwendet werden, und
wobei der mindestens eine korrigierte Primärfarbwert (G', B') durch Interpolation von Farbwerten der angrenzenden, nicht überbelichteten Bildpunkte berechnet wird.

6. Verfahren nach einem der Ansprüche 1 oder 2,
wobei der mindestens eine korrigierte Primärfarbwert (R', G', B') errechnet wird gemäß oder äquivalent zu der Vorschrift:

$$R' = R;$$

$$G' = B + (G0-B0)/(R0-B0) * (h-B);$$

$$B' = B,$$

wobei R, G bzw. B der aktuelle Farbwert einer ersten, zweiten bzw. dritten Primärfarbe des zu korrigierenden Bildpunktes sind, R', G' bzw. B' der korrigierte Farbwert der ersten, zweiten bzw. dritten Primärfarbe des zu korrigierenden Bildpunktes sind, R0, G0 bzw. B0 die aktuellen Farbwerte der ersten, zweiten bzw. dritten Primärfarbe des an den zu korrigierenden Bildpunkt angrenzenden, nicht überbelichteten Bildpunkt sind, und h der Maximalwert für einen Farbwert ist.

7. Verfahren nach einem der Ansprüche 1 oder 2,
wobei der korrigierte Farbwert (G') für eine zweite Primärfarbe als mittlerer Farbwert eines linken, an den zu korrigierenden Bildpunkt angrenzenden, nicht überbelichteten Bildpunkt mit dem Farbvektor <RL, GL, BL> und eines rechten, an den zu korrigierenden Bildpunkt angrenzenden, nicht überbelichteten Bildpunkt mit dem Farbvektor <RR, GR, BR> berechnet wird beispielsweise entsprechend der Vorschrift:

$$G' = B + (\ (GL\text{-}BL)/(RL\text{-}BL) + (GR\text{-}BR)/(RR\text{-}BR)\ )/2 * (h\text{-}B),$$

und

wobei R, G bzw. B der jeweilige aktuelle Farbwert einer ersten, zweiten bzw. dritten Primärfarbe des zu korrigierenden Bildpunktes sind, R', G' bzw. B' der jeweilige korrigierte Farbwert der ersten, zweiten bzw. dritten Primärfarbe des zu korrigierenden Bildpunktes sind, RL, RR, GL, GR, bzw. BL, BR die jeweiligen aktuellen Farbwerte der ersten, zweiten bzw. dritten Primärfarbe der an den zu korrigierenden Bildpunkt links bzw. rechts angrenzenden, nicht überbelichteten Bildpunkte sind, und h der Maximalwert für einen Farbwert ist, und

wobei ein korrigierter Farbwert (B') für die dritte Primärfarbe auf den aktuellen Farbwert (B) der dritten Primärfarbe belassen bzw. gesetzt wird,

wobei vorzugsweise weitere, angrenzende, nicht überbelichtete Bildpunkt in die Berechnung des mittleren Farbtons mit einbezogen werden.

8. Verfahren nach einem der Ansprüche 1 oder 2,
wobei der Farbvektor eines überbelichteten Bildpunktes so korrigiert wird, dass ihm ein fester Farbwert (H0) zugewiesen wird entsprechende der Vorschrift:

$$G' = B + H0 * (h\text{-}B)$$

wobei G' der korrigierte Farbwert einer zweiten Primärfarbe des zu korrigierenden Bildpunktes ist, B ein aktueller Farbwert einer dritten Primärfarbe des zu korrigierenden Bildpunktes ist, H0 ein vorbestimmter Farbton ist, und h der Maximalwert für einen Farbwert ist.

9. Verfahren nach einem der Ansprüche 1 oder 2,
wobei zur Berechnung des korrigierten Farbwertes (G') für eine zweite Primärfarbe eine, vorzugsweise gewichtete, Mittelung zwischen einem aktuellen Farbwert (G0) der zweiten Primärfarbe des an den zu korrigierenden Bildpunkt angrenzenden, nicht überbelichteten Bildpunkt und einem aktuellen Farbwert (G) der zweiten Primärfarbe des zu korrigierenden Bildpunktes erfolgt.

10. Verfahren nach einem der vorhergehenden Ansprüche,
wobei im Signalbereich ein kontinuierlicher Übergang zwischen nicht korrigierten und korrigierten Farbwerten erfolgt, wobei insbesondere in Abhängigkeit von einem Maximalwert für die Farbwerte (h) minus einem aktuellen Farbwert (R) für die erste Primärfarbe des zu korrigierenden Bildpunkts eine gewichtete Mittelwertbildung zwischen dem nicht korrigierten und einem ersten korrigierten Farbvektor erfolgt.

11. Verfahren nach einem der vorhergehenden Ansprüche,
wobei die Anwendung des Verfahrens auf vorbestimmte Bildbereiche begrenzt wird.

12. Verfahren nach Anspruch einem der vorhergehenden Ansprüche,
wobei der vorbestimmte Farbraum sich aus Rot als erste Primärfarbe, Grün als zweite Primärfarbe, und Blau als dritte Primärfarbe zusammensetzt,
wobei die Zielfarbe Rot ist, und
wobei für den zu korrigierenden Bildpunkt die Zielfarbe gesättigt ist und der Farbwert (G) der zweiten Primärfarbe größer als der Farbwert (B) der dritten Primärfarbe ist
und weiter vorzugsweise der Korrekturbereich auf Rot bis Gelb als Zielfarbbereich beschränkt wird, und wobei der Zielfarbbereich dadurch bestimmt ist, dass der Farbwert für die zweite Primärfarbe größer bzw. größer oder gleich dem Farbwert für die dritte Primärfarbe ist.

13. Verfahren nach einem der vorhergehenden Ansprüche,
wobei das digitale Farbbild aus Bildpunkten besteht, die in Zeilen und/oder Spalten angeordnet sind, und wobei zur Korrektur nur solche angrenzende, nicht überbelichteten Bildpunkte verwendet werden, die sich in der gleichen Zeile oder in der gleichen Spalte befinden, wie der zu korrigierende überbelichtete Bildpunkt.

14. Verfahren nach einem der vorhergehenden Ansprüche,

wobei das Verfahren auf die Farbwerte der jeweiligen Primärfarbe für einen jeweiligen Bildpunkt in einem fortlaufenden Datenstrom angewendet wird, wobei vorzugsweise

- nur zeitlich im Datenstrom vorangehende angrenzende, nicht überbelichtete Bildpunkte verwendet werden und/oder
- für Bildpunkte im fortlaufenden Datenstrom Primärfarbwerte (R0, G0, B0) oder daraus rechnerisch ermittelte Eigenschaften gespeichert werden, falls keiner der jeweiligen Primärfarbwerte (R0, G0, B0) gesättigt ist, und jeweils nachfolgend zur Korrektur mindestens eines zu korrigierten Primärfarbwertes (R, G, B) herangezogen werden, falls von letzteren mindestens ein Farbwert gesättigt ist.

15. Computerprogramm mit Befehlen, welche auf einem Datenverarbeitungseinrichtung, wie einem Mikroprozessor, einem Computer oder dergleichen, ausgeführt werden können und dabei die Datenverarbeitungseinrichtung veranlassen, ein Verfahren gemäß einem der Ansprüche 1 bis 14 auszuführen, sodass durch entsprechende Verarbeitung von Bilddaten, insbesondere in Form eines daraus bestehenden Datenstroms, eines digitalen Farbbildes überbelichtete Bildpunkte in dem digitalen Farbbild, wobei die Farbe eines Bildpunktes durch Farbwerte vorbestimmter Primärfarben eines Farbraumes bestimmt ist, bevorzugt eine Überbelichtung einer Zielprimärfarbe, korrigiert werden.

16. Konfigurationsprogramm für einen programmierbaren Logikbaustein, wie zum Beispiel einen Field Programmable Gate Array, FPGA, um interne Strukturen des Logikbausteins so zu konfigurieren, dass in dem Logikbaustein ein Verfahren gemäß einem der Ansprüche 1 bis 14 implementiert ist, sodass der Logikbaustein durch Verarbeitung von Bilddaten, insbesondere in Form eines daraus bestehenden Datenstroms, eines digitalen Farbbildes überbelichtete Bildpunkte in dem digitalen Farbbild, wobei die Farbe eines Bildpunktes durch Farbwerte vorbestimmter Primärfarben eines Farbraumes bestimmt ist, bevorzugt eine Überbelichtung einer Zielprimärfarbe, korrigiert werden.

17. Datenträger auf dem ein Computerprogramm gemäß Anspruch 15 und/oder ein Konfigurationsprogramm gemäß Anspruch 16 gespeichert ist.

18. Digitalkamera zur Aufnahme digitaler Farbbilder mit
einem Bildsensor zur Aufnahme und Bereitstellung von Bilddaten eines digitalen Farbbildes, und
einer Datenverarbeitungseinrichtung zur Aufbereitung der Bilddaten eines aufgenommenen Farbbildes,
wobei die Datenverarbeitungseinrichtung eingerichtet ist, ein Verfahren nach einem der Ansprüche 1 bis 14 auf die Bilddaten des aufgenommenen Bildes anzuwenden, wobei die Digitalkamera vorzugsweise weiter in der Optik einen optischen Tiefpassfilter aufweist.

**Fig. 1**

**Fig. 2**

**Fig. 3**

**Fig. 4**

12    10

11

**Fig. 5**

**Fig. 6**

**Fig. 7**

**Fig. 8**

12    10

11

13

Fig. 9

24

23    27

21    25

26

28

22    29

Fig. 10

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 7495579 B
- US 3971065 A

- US 4630307 A
- US 5668596 A

### In der Beschreibung aufgeführte Nicht-Patentliteratur

- Image Sensors and Signal Processing for Digital Still Cameras. Taylor & Francis Group, 2006